Europäisches Patentamt

European Patent Office  (11) Numéro de publication: **0 204 614**

Office européen des brevets  **A1**

(12) **DEMANDE DE BREVET EUROPEEN**

(21) Numéro de dépôt: 86401119.2  (51) Int. Cl.⁴: **H01Q 15/16 , B29C 65/70**

(22) Date de dépôt: 27.05.86

(30) Priorité: 30.05.85 FR 8508164

(43) Date de publication de la demande:
**10.12.86 Bulletin 86/50**

(84) Etats contractants désignés:
**DE GB IT NL SE**

(71) Demandeur: **THOMSON-CSF**
**173, Boulevard Haussmann**
**F-75379 Paris Cedex 08(FR)**

(72) Inventeur: **Georgel, Jean**
**Thomson-CSF SCPI 19, avenue de Messine**
**F-75008 Paris(FR)**
Inventeur: **Monvoisin, Jacques**
**Thomson-CSF SCPI 19, avenue de Messine**
**F-75008 Paris(FR)**
Inventeur: **Trubert, Valdo**
**Thomson-CSF SCPI 19, avenue de Messine**
**F-75008 Paris(FR)**

(74) Mandataire: **Benoit, Monique et al**
**THOMSON-CSF SCPI 19, avenue de Messine**
**F-75008 Paris(FR)**

(54) **Procédé d'assemblage d'éléments constituant un réflecteur d'antenne.**

㊛ Procédé consistant à coller les éléments entre eux ; les profilés (3,4) de la structure porteuse étant collés et le miroir réflecteur (2) étant collé sur les profilés.
Application aux antennes hyperfréquence.

FIG_1

## PROCEDE D'ASSEMBLAGE D'ELEMENTS CONSTITUANT UN REFLECTEUR D'ANTENNE

La présente invention concerne les procédés d'assemblage d'éléments constituant un réflecteur d'antenne et plus particulièrement les procédés permettant de fixer ces éléments les uns par rapport aux autres.

Les réflecteurs d'antenne comportent généralement une structure porteuse rigide ayant une forme déterminée, sur laquelle est placé un miroir métallique, le miroir forme une surface réfléchissante pour les ondes.

Le miroir est en général constitué par un matériau dit transparent à l'air c'est-à-dire un matériau qui a peu de prise au vent et qui est généralement réalisé sous forme de grillage ou de métal déployé. Sa forme détermine le diagramme de rayonnement de l'antenne, c'est pourquoi elle doit être obtenue très précisément. La structure porteuse est formée de tôles appelées classiquement peignes ou nervures, ces tôles épousent le profil arrière du miroir. Elles peuvent être assemblées entre elles pour former une ossature résistante ou alors être maintenues par une autre ossature résistante formée de poutres ou de treillis qui supporte l'ensemble.

Les procédés d'assemblage des éléments de la structure porteuse tels que les tôles supportant le miroir consistent généralement à effectuer un rivetage ou un vissage ou des soudures pour fixer ces tôles les unes par rapport aux autres. Le procédé d'assemblage du miroir sur cette structure consiste classiquement à effectuer un rivetage et à utiliser des couvre-joints ou à utiliser des agrafes à ressort ou également à souder le miroir sur la structure.

Le principal inconvénient de ces procédés résulte du fait que des pressions sont exercées sur les éléments et notamment sur le miroir lorsqu'on met en place les agrafes ou les rivets. Ces pressions entraînent des déformations du miroir qui modifient le diagramme de rayonnement de l'antenne. Lorsque des éléments sont soudés ce sera alors les contraintes thermiques exercées au moment des soudures qui entraînent des déformations néfastes du miroir.

La présente invention a pour but de remédier à ces inconvénients en proposant un procédé d'assemblage des éléments constituant le réflecteur principalement caractérisé en ce que ces éléments sont assemblés par collage.

D'autres particularités et avantages de la présente invention apparaîtront clairement à la lecture de la description suivante présentée à titre d'exemple non limitatif et faite en regard des figures du dessin annexé qui représentent :

-figure 1, un réflecteur d'antenne obtenu par une première méthode de réalisation du procédé d'assemblage selon l'invention ;

figure 2, 3 des détails de réalisation du collage au niveau des peignes selon la figure 1 ;

-figure 4, 5, deux exemples de réalisation de profils de peignes ;

figure 6, une deuxième méthode de réalisation du procédé d'assemblage selon l'invention ;

-figure 7, un détail de réalisation d'une mèche selon la figure 6 ;

-figure 8, une structure porteuse assemblée selon le procédé de l'invention ;

-figure 9, le détail de l'assemblage des peignes en un noeud ;

figure 10, une réalisation particulière d'un moule permettant l'assemblage du noeud selon la figure 9 ;

-figures 11 et 12, une réalisation particulière des moules pour l'assemblage des peignes à la périphérie de la structure.

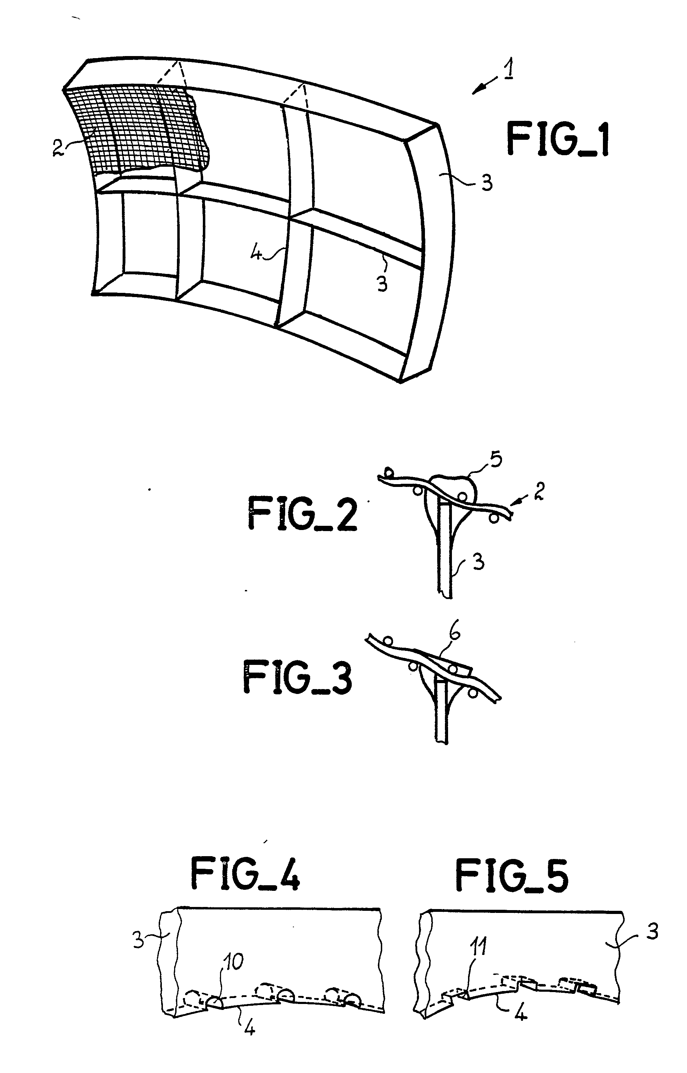

Sur la figure 1 on a représenté un réflecteur d'antenne ce réflecteur étant constitué par ses principaux éléments qui sont notamment une ossature 1 et un miroir 2, le miroir étant présenté partiellement sur cette figure. L'ossature 1 est constituée par un ensemble de tôles 3 appelées classiquement peignes ou nervures. Ces peignes sont disposés les uns par rapport aux autres d'une manière connue en soi qui permet d'obtenir un support rigide capable de supporter le miroir et de résister aux contraintes imposées par l'environnement, notamment les contraintes atmosphériques. Le profil avant 4 de ces peignes est obtenu de manière très précise par des procédés classiques de façon à ce que le miroir puisse être appliqué directement sur ces profils et qu'il ait ainsi la forme adéquate permettant d'obtenir le diagramme de rayonnement de l'antenne désiré.

Le miroir 2 qui a été représenté est constitué dans cet exemple particulier de réalisation par un grillage, ce miroir est appliqué directement sur les profils avant des peignes qui lui communiquent la forme requise.

Selon un premier mode de réalisation adapté tout particulièrement à l'utilisation d'un grillage, la colle est déposée par l'avant c'est-à-dire par la face qui réfléchit les ondes. Cette colle est rapportée à travers les mailles du miroir à l'aide par exemple d'un pistolet non représenté de façon à enrober en même temps le bord du peigne et les mailles du miroir. La structure métallique qui supporte le miroir repose par exemple sur un plan horizontal pendant toute la durée du collage, de manière à ce que le miroir ne change pas de position. Avant le durcissement de la colle, la colle débordant du miroir est arasée par exemple à l'aide d'une spatule, après le durcissement le grillage adhère parfaitement aux peignes et constitue un ensemble de grande rigidité répondant aux contraintes imposées.

Sur les figures 2 et 3 on a représenté partiellement une coupe transversale d'une nervure, le grillage étant vu également de profil. Lorsque la colle est injectée à l'aide du pistolet elle se présente sous forme d'un amas 5 qui se répartit en surface au-dessus du miroir 2 et à l'arrière autour du peigne 3. Avant le durcissement de cette colle on procède à un arasage à l'aide de la spatule de façon à obtenir une surface plane 6, comme cela est représenté sur la figure 3. Sur les bordures extérieures du miroir on procède à un arasage en surface et également sur le périmètre du grillage dans le cas où le grillage ne s'étend pas au-delà des nervures extérieures de l'ossature.

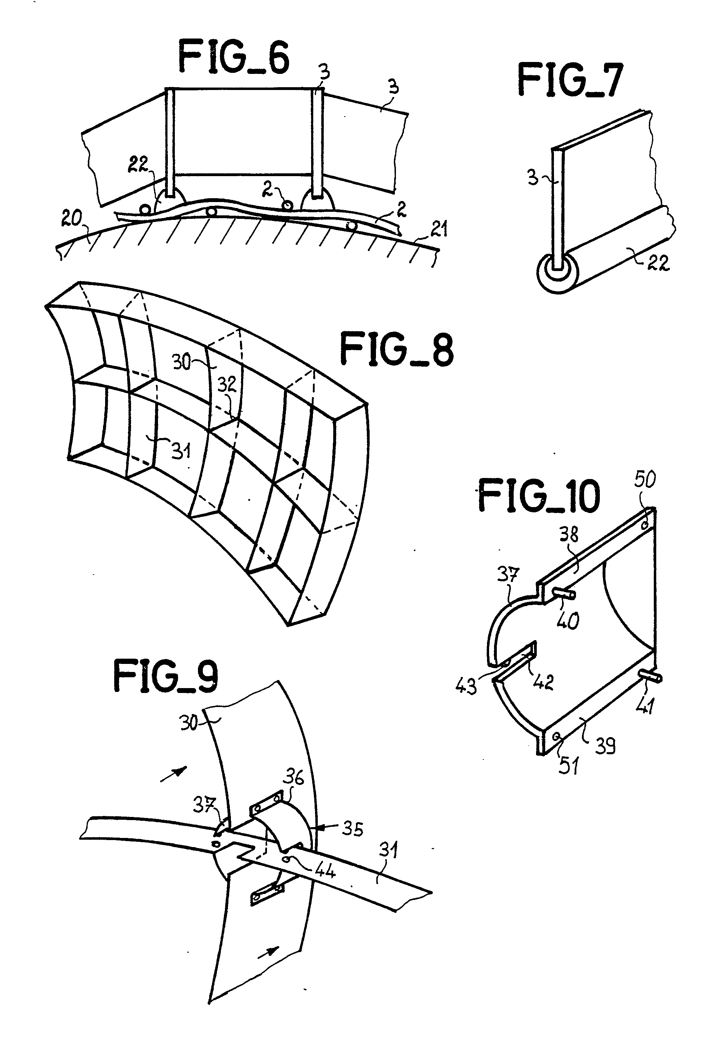

Le profil 4 des nervures 3 recevant le grillage peut avoir une courbure lisse. Il peut également, selon une variante de réalisation, comporter des encoches régulièrement réparties et s'étendant sur la longueur de ce profil. Les encoches peuvent avoir une forme parallélépipédique ou cylindrique comme représenté respectivement sur les figures 4 et 5, ces encoches permettent d'améliorer l'accrochage de la colle sur les profils des peignes.

Sur la figure 6 on a représenté une deuxième méthode de réalisation de l'assemblage selon l'invention. Selon cette deuxième méthode on utilise un moule 20 qui a une surface de forme requise à donner au réflecteur. Cette figure 6 représente une vue partielle en coupe du réflecteur posé sur le moule 20. Le miroir 2 est donc posé sur le moule 20, ce moule étant recouvert d'une membranne 21 très mince, ayant la caractéristique d'être antiadhésive.

Le profil des nervures n'a plus besoin d'avoir une très grande précision dans cette méthode de réalisation car la précision de la courbure à donner au miroir est alors donnée par le moule 20. Le procédé d'obtention du moule relève des techniques classiques du moulage. Des mèches 22 réalisées par exemple en fibre de verre sont enduites de colle et sont placées préalablement sur le profil de chaque peigne 3. La structure ainsi équipée est déposée sur le miroir 2, les mèches 22 enduites de colle viennent emprisonner les fils du miroir. Après durcissement de la colle, le moule peut être retiré sans difficulté sa surface ayant été recouverte de la membrane antiadhésive 21 constituée par exemple par un film ou un vernis anti-adhésif.

La première méthode de réalisation s'applique plus particulièrement à des réflecteurs de grande surface et à des miroirs tels que du grillage ou du métal déployé suffisamment transparent pour que la colle puisse pénétrer et atteindre les peignes situés à l'arrière du tapis formé par ce miroir.

La deuxième méthode est plutôt réservée à des miroirs ayant des dimensions limitées mais pour lesquels il est nécessaire d'avoir une très grande précision de la courbure formée par ce miroir, d'autre part cette méthode peut s'appliquer à des miroirs de toutes natures c'est-à-dire des miroirs constitués par des grillages, du métal déployé, des tôles perforées ou des tôles pleines.

Sur la figure 8 on a représenté - schématiquement une structure porteuse qui comporte des peignes verticaux 30 et des peignes horizontaux 31 s'encastrant les uns dans les autres de manière à former une structure rigide. Chaque encastrement constitue un noeud 32.

Le procédé selon l'invention consiste également à coller les peignes entre eux, à l'endroit où ils s'encastrent et où ils forment des noeuds 32.

Sur la figure 9 on a représenté le détail d'un noeud formé par l'encastrement de deux peignes 30, 31. Le procédé consiste donc à injecter de la colle au niveau de cet encastrement. Pour cela on utilise un moule 35 constitué en deux parties 36, 37 qui permet d'être fixé sur les peignes autour du noeud 32 de manière à constituer une cavité dans laquelle on peut injecter de la colle.

Le moule 35 se présente sous la forme de deux demi-cylindres 36, 37, fermés tous deux à une même extrémité. Chaque demi-cylindre, tel que le demi-cylindre 37 représenté sur la figure 10, comporte deux pattes 38, 39, s'étendant le long des deux bordures délimitant le demi-cylindre.

Les pattes 38 et 39, comportent respectivement un doigt 40 et 41 et respectivement un trou 50, 51. Le doigt 40 est placé à une extrémité de la patte 38 et le trou 50 à l'autre. Le doigt 41 est placé à une extrémité de la patte 39 et le trou 51 est placé à l'autre extrémité en opposition avec le trou et le doigt de la patte 38. Pour l'autre demi-moule non représenté, les positions des doigts 40, 41 et des trous 50, 51 sont inversées. Les pattes munies des doigts permettent en fait de fixer les demi-moules de part et d'autre d'un des deux peignes (par exemple le peigne 30) qui comportent des trous aptes à recevoir ces doigts 40, 41. Ainsi lorsque les deux parties du moule sont placées de part et d'autre de ce peigne, ces deux parties constituent une cavité fermée autour du noeud tel que cela est représenté sur la figure 9.

Les deux parties du moule 35 possèdent une encoche 42 qui permettent d'encastrer l'autre peigne (le peigne 31). Le profil des peignes s'engage à l'intérieur des encoches 42 et est bloqué à l'aide d'un têton de caractéristique élastique 43 qui se loge dans un trou 44 prévu à cet effet sur le flan du peigne se trouvant en regard.

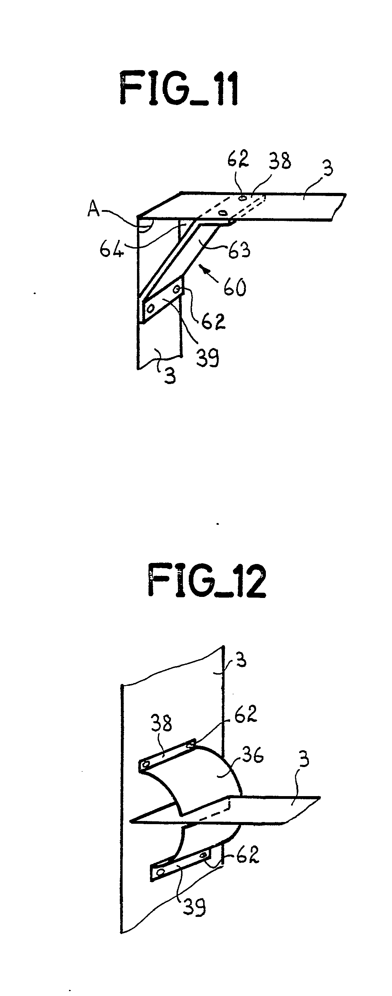

Sur la figure 11 on a représenté un moule 60 permettant le collage de deux peignes formant un angle entre eux à la périphérie de la stucture. Ce moule comporte deux pattes de fixation 38 et 39 qui permettent de le fixer pendant le collage respectivement sur le peigne horizontal et sur le peigne vertical qui forment l'angle A. Ces pattes sont fixées à l'aide de vis serrées par des écrous 62. Il comporte une plaque 63 et une plaque 64 - (placées sur le plan arrière de la figure 11) solidaires entre elles qui permettent de constituer une cavité d'angle dans laquelle on peut injecter de la colle.

Sur la figure 12 on a représenté un moule permettant le collage de deux peignes formant deux angles entre eux à la périphérie de la structure. Ce moule est constitué par un demi-moule 36 tel qu'il a été décrit sur la figure 10. Les moyens de fixation du moule sont réalisés par des vis serrées par des écrous 62.

Les colles choisies sont des colles qui ont à la fois . les caractéristiques d'être résistantes mécaniquement, d'avoir un bon coefficient de viscosité et d'avoir une bonne aptitude au vieillissement.

Pour l'assemblage du miroir sur la structure porteuse on peut par exemple utiliser une résine du type Redux 410 de CIBA GEYGI, et pour l'assemblage des éléments de la stucture porteuse, on peut utiliser par exemple une résine du type CY 219 de CIBA GEYGI.

## Revendications

1. Procédé d'assemblage d'éléments constituant un réflecteur d'antenne, ces éléments comprenant des peignes encastrés entre eux de manière à former des noeuds constituant la structure porteuse du réflecteur, caractérisé en ce que les peignes (3) sont assemblés entre eux par collage au moyen de moules (35), un moule étant placé à chaque noeud (30) de la structure (1) pour recevoir la colle injectée.

2. Procédé d'assemblage d'éléments constituant un réflecteur d'antenne, ces éléments comprenant une structure porteuse (1) et un miroir réflecteur supporté par la structure, caractérisé en ce que le miroir est collé sur la structure (1), la structure supportant le miroir étant placée sur un plan horizontal et la colle étant rapportée par la face avant du miroir.

3. Moule pour injection de colle sur une structure porteuse d'antenne comportant des peignes encastrés entre eux de manière à former des noeuds, caractérisé en ce qu'il comprend un ou deux demi cylindres (36, 37) dont une extrémité est obturée, chacune des deux parties étant aptes à être placées de part et d'autre de peignes (3) de la structure porteuse d'antenne formant un entrecroisement, le ou les deux demi cylindres constituant une cavité pour recevoir la colle et permettre ainsi l'assemblage des peignes (3).

4. Moule pour injection de colle sur une structure porteuse d'antenne comportant des peignes encastrés entre eux de manière à former des noeuds, caractérisé en ce qu'il comprend deux plaques (63, 64) solidaires formant une cavité apte à recevoir la colle lorsqu'elles sont fixées contre deux peignes de la structure porteuse formant un angle permettant ainsi d'assembler les peignes.

5. Procédé selon les revendications 3 ou 4, caractérisé en ce que les moules (35, 36, 50), comportent des moyens de fixation (40, 41, 50, 51) sur la structure.

6. Procédé selon la revendication 5, caractérisé en ce que les moyens de fixation sont constitués par des doigts (40, 41) et des trous (50, 51) placés sur les rebords (38, 39) de chaque partie du moule (35) les doigts de l'une des parties du moule étant destinés à traverser les peignes qui comportent des trous à cet effet, et à venir se loger dans les trous correspondants sur l'autre partie du moule.

7. Procédé selon la revendication 5, caractérisé en ce que les moyens de fixation sont constitués par des vis serrées par des écrous (62).

8. Procédé d'assemblage selon la revendication 2, caractérisé en ce que le profil (4) des peignes (3) comporte des encôches (10, 11).

FIG_1

FIG_2

FIG_3

FIG_4    FIG_5

FIG_6

FIG_7

FIG_8

FIG_10

FIG_9

# FIG_11

# FIG_12

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| A | DE-A-2 147 163  (W. ZARGES)<br>* En entier * | 1 | H 01 Q   15/16<br>B 29 C   65/70 |
| | --- | | |
| A | FR-A-1 550 422  (AVIOLANDA)<br>* En entier * | 1 | |
| | --- | | |
| A | FR-A-1 435 472  (A. BRAMLEY) | | |
| | --- | | |
| A | FR-A-1 420 087  (FERROTEST) | | |
| | ----- | | |

DOMAINES TECHNIQUES
RECHERCHES (Int. Cl.4)

H 01 Q
B 29 C

Le présent rapport de recherche a été établi pour toutes les revendications

| Lieu de la recherche | Date d'achevement de la recherche | Examinateur |
|---|---|---|
| LA HAYE | 01-09-1986 | CHAIX DE LAVARENE C. |